# EUROPEAN PATENT APPLICATION

(11) **EP 4 786 031 A1**
(43) Date of publication of application: **05.08.2026**
(21) Application number: 25219176.2
(22) Date of filing: 27.11.2025
(51) Int. Cl.: B01D 53/26, B01D 53/28, F24F 3/14, B01D 53/14, B01D 53/18

(54) **CONTROL SYSTEM ARCHITECTURE FOR HEAT EXCHANGER CORROSION PREVENTION FOR LIQUID DESICCANT-BASED HEATING, VENTILATION, AIR-CONDITIONING AND REFRIGERATION SYSTEMS**

(30) Priority: 27.11.2024 US 202463725655 P
(71) Applicant: Carrier Corporation, Palm Beach Gardens, FL 33418 (US)
(72) Inventor: CHATTERJEE, Rukmava, East Syracuse, 13057 (US); SUR, Aritra, East Syracuse, 13057 (US); ALLAHAR, Kerry, East Syracuse, 13057 (US); LIANDO, Aubrey, East Syracuse, 13057 (US); PATTERSON, Matthew, East Syracuse, 13057 (US); KOHLER MENDIZABAL, Johannes, East Syracuse, 13057 (US)
(74) Representative: Dehns

(57) **Abstract**

A liquid desiccant (LD)-based dehumidification system (601) is provided for heating, ventilation, air conditioning and refrigeration (HVAC&R) systems. The LD-based dehumidification system (601) includes a tank (610) containing LD (611), a contact media device (620) including media (621) for disposition in a flow of air to be dehumidified and a sump (622) disposed below the media (621) to receive LD (611) drained from the media (621), a pump and valve system (630) to pump the LD (611) from the tank (610) to the contact media device (620) to wet the media (621) and from the sump (622) to the tank (610), a heat exchanger (640) through which LD (611), which is pumped from the sump (622) to the tank (610), flows, a sensing system (650) to sense one or more conditions of the LD (611) and a controller (780) to control the pump and valve system (630) in accordance with a system status and the one or more conditions of the LD (611).

## Description

### BACKGROUND

The present invention relates to heating, ventilation, air-conditioning and refrigeration (HVAC&R) systems and, more particularly, to controls for heat exchanger corrosion protection for application in a liquid desiccant (LD)-based HVAC&R system.

A desiccant is a substance that absorbs moisture from the environment, due to its high affinity for water vapor, thus helping to keep the surrounding area dry. Desiccants typically include hygroscopic materials that attract and hold water vapor from the air to induce or sustain a state of dryness (desiccation) in its vicinity. Industrially, desiccants are widely used for moisture control in packaging, pharmaceuticals, electronics, food preservation and dehumidification systems to maintain product integrity and prevent corrosion.

### BRIEF DESCRIPTION

According to a first aspect of the invention, a liquid desiccant (LD)-based dehumidification system is provided for heating, ventilation, air conditioning and refrigeration (HVAC&R) systems. The LD-based dehumidification system includes a tank containing LD, a contact media device including media for disposition in a flow of air to be dehumidified and a sump disposed below the media to receive LD drained from the media, a pump and valve system to pump the LD from the tank to the contact media device to wet the media and from the sump to the tank, a heat exchanger through which LD, which is pumped from the sump to the tank, flows, a sensing system to sense one or more conditions of the LD and a controller to control the pump and valve system in accordance with a system status and the one or more conditions of the LD.

Optionally, the LD includes at least one or more of inorganic salts and organic compounds.

Optionally, the LD includes at least one or more of aqueous solutions of inorganic salts, organic compounds, acetate and formate-based desiccants and mixed and hybrid solutions.

Optionally, the contact media device is provided as at least one of an absorber and one or more desorbers and the media includes a high surface area packing material.

Optionally, the LD sump is uncovered.

Optionally, the one or more conditions of the LD are a concentration of the LD, a pH of the LD and a temperature of the LD and the system status is one of an operational status and a non-operational status.

Optionally, the controller controls the pump and valve system to drain the LD from the sump and to the tank in accordance with a system status being a non-operational status and the controller controls the pump and valve system to cut off a flow of the LD from the sump and through the heat exchanger in accordance with the one or more conditions of the LD being outside of predefined design conditions.

Optionally, the tank containing LD is a first tank LD; the system comprises a second tank containing LD treatment; the pump and valve system is a first pump and valve system to pump the LD from the first tank to the contact media device to wet the media and from the sump to the first tank; the system comprises a second pump and valve system to pump the LD treatment to the first tank to treat the LD; and the controller is configured to control both the first and second pump and valve systems in accordance with a system status and the one or more conditions of the LD.

Optionally, the LD treatment includes a pH buffer and the controller controls the second pump and valve system to pump the LD treatment to the first tank to treat the LD in accordance with a pH of the LD being outside of predefined design conditions.

Optionally, the controller controls the first pump and valve system to drain the LD from the sump and to the first tank in accordance with a system status being a non-operational status and the controller controls the first pump and valve system to cut off a flow of the LD from the sump and through the heat exchanger in accordance with the one or more conditions of the LD being outside of predefined design conditions.

Optionally, the controller controls the first pump and valve system to drain the LD from the sump and to the first tank in accordance with a system status being a non-operational status and the controller controls the first pump and valve system to cut off a flow of the LD from the sump and through the heat exchanger in accordance with the one or more conditions of the LD being outside of predefined design conditions and tending towards undesirable system operating conditions or unfavorable atmospheric weather conditions.

According to a second aspect of the invention, a method of operating a liquid desiccant (LD)-based dehumidification system is provided and includes pumping LD to a contact media device including media and a sump disposed below the media to receive LD drained from the media for wetting of the media by the LD, pumping the LD from the sump to and through a heat exchanger, sensing one or more conditions of the LD and controlling the pumping in accordance with a system status and the one or more conditions of the LD.

Optionally, the method further includes disposing the media in a flow of air to be dehumidified.

Optionally, the one or more conditions of the LD are a concentration of the LD, a pH of the LD and a temperature of the LD and the system status is one of an operational status and a non-operational status.

Optionally, the method further includes treating the LD in accordance with a pH of the LD being outside of predefined design conditions and tending towards undesirable system operating conditions or unfavorable atmospheric weather conditions.

Optionally, the controlling includes controlling the pumping to drain the LD from the sump in accordance with a system status being a non-operational status and controlling the pumping to cut off a flow of the LD from the sump and through the heat exchanger in accordance with the one or more conditions of the LD being outside of predefined design conditions.

Additional features and advantages are realized through the techniques of the present invention. Other embodiments and aspects of the invention are described in detail herein and are considered a part of the claimed technical concept. For a better understanding of the invention with the advantages and the features, refer to the description and to the drawings.

### BRIEF DESCRIPTION OF THE DRAWINGS

For a more complete understanding of this invention, reference is now made to the following brief description, taken in connection with the accompanying drawings and detailed description, wherein certain exemplary embodiments will be described in greater detail by way of example only, and wherein like reference numerals represent like parts:
FIG. 1 is a schematic illustration of contact media wetting by liquid desiccant (LD) and by LD dosed with surfactant;
FIG. 2 is a schematic diagram of an LD-based dehumidification system in accordance with embodiments;
FIG. 3 is a schematic diagram of an LD-based dehumidification system with an absorber and two desorbers in accordance with embodiments;
FIG. 4 is a schematic diagram of a controller of the LD-based dehumidification system of FIG. 3 in accordance with embodiments;
FIG. 5 is a flow diagram illustrating a method of operating an LD-based dehumidification system in accordance with embodiments;
FIG. 6 is a schematic diagram of an LD-based dehumidification system with flow control based on LD conditions and a system status in accordance with embodiments;
FIG. 7 is a schematic diagram of an LD-based dehumidification system with LD treatment capability and flow control based on LD conditions and a system status in accordance with embodiments;
FIG. 8 is a schematic diagram of a controller of the LD-based dehumidification system of FIG. 7 in accordance with embodiments; and
FIG. 9 is a flow diagram illustrating a method of operating an LD-based dehumidification system with flow control based on LD conditions and a system status in accordance with embodiments.

### DETAILED DESCRIPTION

Traditionally, air-conditioning units reduce humidity by overcooling the air and in some cases reheating it prior to being supplied. Liquid desiccant-based HVAC systems reduce sensible and latent loads by using a liquid desiccant (LD) solution to absorb moisture from the air. This process helps control both temperature (sensible load) and humidity (latent load), creating a more comfortable indoor environment while improving energy efficiency. This can be achieved by having the process air pass through a porous bed of desiccant-soaked contact media. Such efficient and responsive dehumidification heavily relies on instantaneous and complete wetting of the contact media with the LD at all times. However, the inherently high surface tension of most LDs delays or substantially inhibits the achievement of a complete LD wetting state on the contact media. This can lead to sporadic contact media surface coverage, higher demand for LD flooding rates (and hence larger pumps drawing more power) compared to the flow of air through the contact media, undesirable carryover of LD droplets from the physical boundary of the contact media into the supply airstream and eventually culminating in inefficient dehumidification.

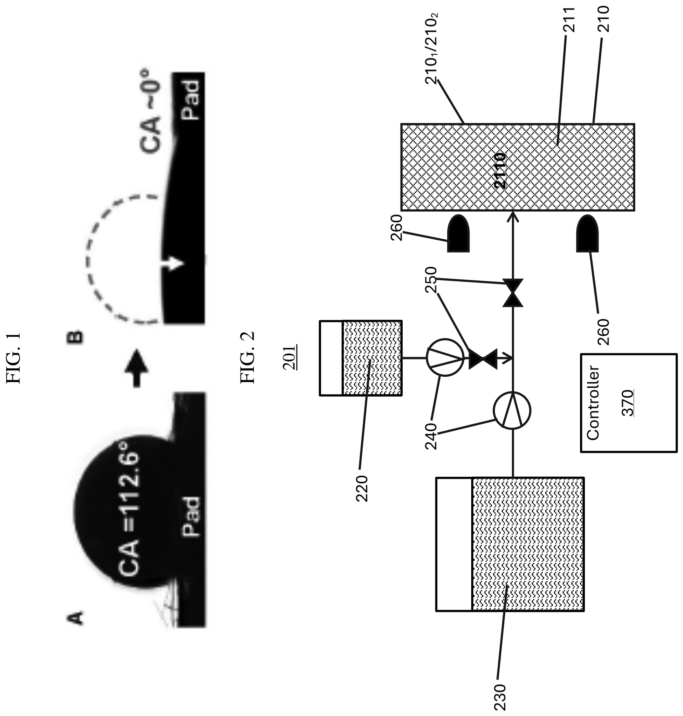

Thus, as will be described below, an advanced system for surface wettability modification is provided in a liquid desiccant-based dehumidification system of an HVAC system. The system detects, achieves and sustains continuous wetting of contact media with LD. The wettability modification of LD-media is effectuated with the addition of surface-active agents in the LD and/or surface treatment of the contact media. For example, as shown in image A of FIG. 1, a drop of pure LD can sit indefinitely on an untreated surface of contact media without wetting it, but the addition of only 0.1 weight% of a surfactant in the LD is sufficient for superwetting as shown in image B of FIG. 1. The system can include a sensing-control system architecture that demonstrates a phased approach of detecting contact media wetting with computer vision-enabled optical/depth sensors, automated dosing of surfactant into the LD using metering-pumping devices based on the measured surface tension of the LD in storage tank, re-checking contact media wetting using sensors and providing feedback to the system to halt surfactant dosing once complete wetting is achieved.

In addition, a heat exchanger (HX) operating in an LD-based HVAC system enhances thermal efficiency by transferring heat between LD streams in absorbers and desorbers, pre-cooling the desiccant for better moisture absorption and pre-heating it for more effective water desorption, thereby reducing energy consumption while maximizing dehumidification performance. The HX typically has an operational range of 35-65% LD concentration and 8-10 pH. It has been found, however, that certain environmental and system conditions, including increases in pH and changes in LD concentration, can drive crystallization of LD in the HX. This drying and crystallization of LD can alter the thermophysical properties of the LD which can lead to accelerated corrosion and eventual loss of HX structural integrity. This results in a reduced energy efficiency of the system stemming from inefficient heat transfer between hot-cold LD streams in the HX, need for frequent servicing and higher maintenance costs.

For example, a liquid desiccant-based dedicated outdoor air system (LDDOAS) can be configured to provide dehumidification capabilities with a LD wetted contact media device downstream of an evaporator. In a non-operational system during unfavorable weather (e.g., and winter season) or during unforeseen operating conditions, the LD can gravity-drain from the contact media and crystallize near the interface of the contact media and an underlying LD sump . These solidified deposits can be difficult to disintegrate mechanically and do not tend to dissolve easily. At cold startup, crystallized LD can lead to bursting of an LD pipeline due to clogging of the pores in the overhead LD distributor assembly which is responsible for uniform wetting of the pads.

Thus, as will be described below, a sensing and control system is provided and includes ambient temperature-humidity and LD pH-conductivity sensors installed in an LD subsystem to detect unfavorable conditions outside of a designed operating envelope, valves that can isolate the HX ensuring the HX stays fully flooded and a pump control architecture to fully drain LD from sumps into a covered, isolated and insulated LD tank that can prevent contact with ambient atmospheric conditions during non-operational system modes. The proposed architecture can drain all LD from absorber and/or desorber contact media sumps to a common storage tank by virtue of various pumps and valves when the system is non-operational and can cut off flow to the HX when the thermophysical properties of the LD, such as LD concentration, LD pH, LD temperature, etc., fall outside of safe design conditions.

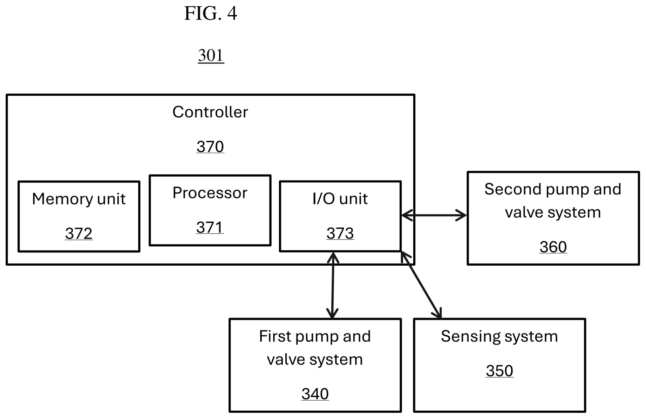

With reference to FIG. 2, an LD-based dehumidification system 201 is provided and includes a contact media device 210 including high surface area packing porous material or media 211 (hereinafter referred to as "media 211) for disposition in a flow of air to be dehumidified, a supply of surfactant 220 that is compatible with the LD and a supply of LD 230 to wet the media 211. The contact media device 210 can include or be provided as at least one of an absorber 210₁ and a desorber 210₂ and the media 211 can include or be provided as a lattice of filter material 2110. The media 211 and/or the filter material 2110 can be contact media designed to increase interfacial surface area between the LD and air and can be made from durable materials that are resistant to water and chemicals and that offer minimal resistance to airflow and promote capillary action to maintain a surface film of LD, enhancing the contact efficiency between the air and desiccant solution thereby improving the mass transfer. Examples for the media 211 and/or the filter material 2110 can include asymmetric cross-flow honeycomb pads often made of cellulose-based materials (wood or bamboo-based), polymeric mesh made of hydrophilic materials (e.g., polypropylene polyester, polyvinyl chloride), ceramics or porous ceramic pads, open cell foam materials (polyurethane, melamine foam), fibrous materials (polyester, nylon), combinations of at least one or more of the above and other suitable materials. The supply of the LD 230 can be dosed with the supply of the surfactant 220 to adjust a wettability of the media 211 by the LD 230. The LD-based dehumidification system 201 can further include one or more pumps 240 and one or more valves 250, one or more sensors 260 and a controller (see, e.g., the controller 370 of FIG. 4). The one or more pumps 240 and the one or more valves 250 are configured to supply an amount of the supply of the surfactant 220 for dosing the supply of the LD 230 to the supply of the LD 230 and to supply an amount of the supply of the LD 230, which is dosed with the amount of the supply of the surfactant 220, to the contact media device 210. The one or more sensors 260 are configured to sense a wetting of the media 211 by the amount of the supply of the LD 230, which is dosed with the amount of the supply of the surfactant 220. The controller is operably coupled with the one or more pumps 240, the one or more valves 250 and the one or more sensors 260 and is configured to control the one or more pumps 240 and the one or more valves 260 in accordance with the wetting of the media by the amount of the supply of the LD 230, which is dosed with the amount of the supply of the surfactant 220, which is sensed by the one or more sensors 260.

Potassium acetate (LD) being a salt solution, not all surfactants are equally effective in lowering surface tension, as some of them may precipitate or lose their activity. In accordance with embodiments, the surfactant 220 can include at least one or more of the following classes: (I) Nonionic Surfactants (e.g., Polyethylene glycol-based, Alkyl polyglucosides like decyl glucoside, Polysorbates i.e., Tween series, Dodecanoyl-Glucosamine, Fatty Alcohol Ethoxylate), (II) Anionic Surfactants (e.g., Sodium dodecyl sulfate, Sodium lauryl ether sulfate), (III) Zwitterionic Surfactants (e.g., Cocamidopropyl betaine, Lauryl betaine), (IV) Silicone-based Surfactants (Siloxane polyethers like Silwet L-77). The effectiveness of a surfactant depends on the specific concentration of potassium acetate, as higher salt levels can reduce the efficacy of certain types. Triton surfactants, particularly nonionic types like Triton X-100, are effective in potassium acetate solutions due to their lack of charged groups, which provides stability in high-ionic environments. Their nonionic nature prevents interactions with ions (such as potassium and acetate), reducing the risk of precipitation and ensuring consistent solubility. Additionally, Triton surfactants have an optimal hydrophilic-lipophilic balance, making them effective at lowering surface tension in polar, salt-containing solutions. This nonionic stability minimizes electrostatic interactions with the ions, allowing Triton surfactants to perform reliably in these conditions. The LD 230 can include aqueous solutions of hygroscopic salts with high osmotic potential (affinity for water) and low volatility which can be regenerated through heat exchange. Examples of LD 230 can include but are not limited to at least one or more of aqueous solutions of inorganic salts (like Lithium Chloride, Calcium Chloride, Lithium Bromide, Potassium Formate, Ammonium Nitrate, Potassium Nitrate, Sodium Chloride, Magnesium Chloride, Copper Sulfate, Aluminum Chloride, Barium Chloride), organic compounds (like Triethylene Glycol, Ethylene Glycol, Propylene Glycol, Glycerol), acetate and formate-based desiccants (like Potassium Acetate, Potassium Formate, Sodium Acetate, Sodium Formate), mixed and hybrid solutions (like Lithium Chloride-Magnesium Chloride Mixture, Calcium Nitrate and Magnesium Nitrate Blends, composite desiccants). In accordance with further embodiments, the surfactant 220 can include at least one or more of the following classes: (I) Nonionic Surfactants (e.g., Polyethylene glycol-based, Alkyl polyglucosides like decyl glucoside, Polysorbates i.e., Tween series, Dodecanoyl-Glucosamine, Fatty Alcohol Ethoxylate), (II) Anionic Surfactants (e.g., Sodium dodecyl sulfate, Sodium lauryl ether sulfate), (III) Zwitterionic Surfactants (e.g. Cocamidopropyl betaine, Lauryl betaine), (IV) Silicone-based Surfactants (Siloxane polyethers like Silwet L-77). The LD 230 can include at least one or more of aqueous solutions of inorganic salts (like Lithium Chloride, Calcium Chloride, Lithium Bromide, Potassium Formate, Ammonium Nitrate, Potassium Nitrate, Sodium Chloride, Magnesium Chloride, Copper Sulfate, Aluminum Chloride, Barium Chloride), organic compounds (like Triethylene Glycol, Ethylene Glycol, Propylene Glycol, Glycerol), acetate and formate-based desiccants (like Potassium Acetate, Potassium Formate, Sodium Acetate, Sodium Formate), mixed and hybrid solutions (like Lithium Chloride-Magnesium Chloride Mixture, Calcium Nitrate and Magnesium Nitrate Blends, composite desiccants)

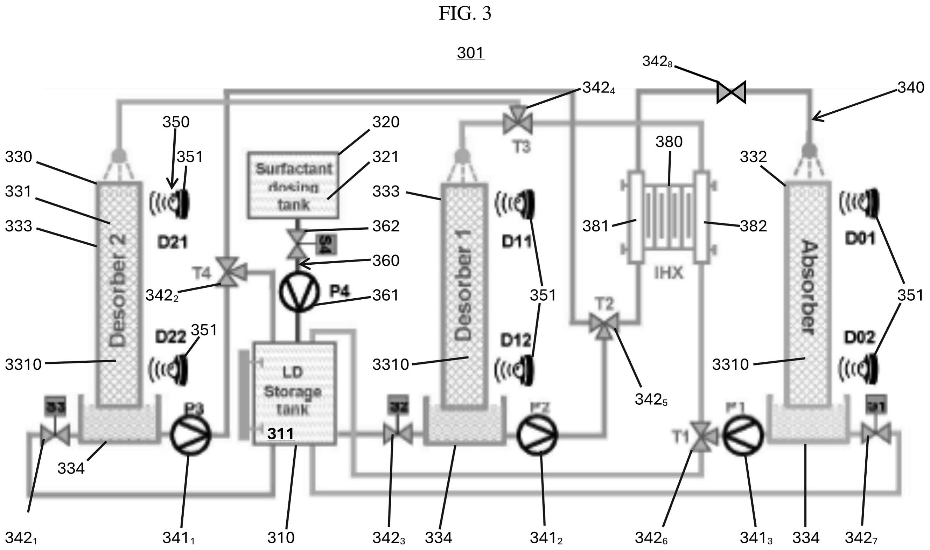

With reference to FIGS. 3 and 4, an LD-based dehumidification system 301 is provided and includes a first tank 310 containing LD 311, a second tank 320 containing surfactant 321 that is compatible with the LD 311, a structured contact media device 330 incorporating high surface area packing porous material or media 331 (hereinafter referred to as "media 331") for disposition in a flow of air to be dehumidified, a first pump and valve system 340, a sensing system 350, a second pump and valve system 360 and a controller 370 (see FIG. 4). The first pump and valve system 340 is configured to pump the LD 311 from the first tank 310 and to the contact media device 330 to wet the media 331. The sensing system 350 is configured to sense wetting of the media 331 by the LD 311. The second pump and valve system 360 is configured to pump the surfactant 321 from the second tank 320 to the first tank 310 whereupon the surfactant 321 that is pumped to the first tank 310 can mix with and thereby dose the LD 311 in the first tank 310. The controller 370 is operably coupled with the first pump and valve system 340, the sensing system 350 and the second pump and valve system 360 and is configured to control the first and second pump and valve systems 340 and 360 in accordance with the wetting of the media 331, which is sensed by the sensing system 350, to thereby control a dosing of the LD 311 with the surfactant 321 and thus for adjusting the wetting of the media 331.

As shown in FIG. 4, the controller 370 can include a processor 371, a memory unit 372 and an input/output (I/O) unit 373 by which the processor 371 is communicative with the first pump and valve system 340, the sensing system 350 and the second pump and valve system 360. The memory unit 372 has executable instructions stored thereon which are readable and executable by the processor 371. When the processor 371 reads and executes the executable instructions, the processor 371 is caused to operate and to control operations of the first pump and valve system 340, the sensing system 350 and the second pump and valve system 360 generally as described herein. That is, when the processor 371 reads and executes the executable instructions, the processor 371 and the controller 370 as a whole controls the operations of the first and second pump and valve systems 340 and 360 in accordance with the wetting of the media 331 sensed by the sensing system 350 and in accordance with a measured parameter of the LD 311 in the first tank 310 to thereby automatically control the dosing of the LD 311 with the surfactant 321 for adjusting the wetting of the media 331. In accordance with embodiments, the measured parameter can be, but is not required to be, a surface tension of the LD 311 in the first tank 310 and/or some other similar parameter (i.e., a wetting rate of the media 311). In addition, when the processor 371 reads and executes the executable instructions, the processor 371 and the controller 370 as a whole automatically ceases the dosing of the LD 311 with the surfactant 321 once complete wetting of the media 331 as sensed by the sensing system 350 is achieved.

The contact media device 330 can include or be provided as at least one of an absorber 332 and one or more desorbers 333, the media 311 can include or be provided as a high surface area packing porous material 3310 each of the at least one of the absorber 332 and the one or more desorbers 333 can include a sump 334, which is disposed below the corresponding high surface area packing porous material 3310 and which is fluidly coupled with the first tank 310. For purposes of clarity and brevity, the following description will relate to the case in which the LD-based dehumidification system 301 includes one absorber 332 and two desorbers 333 as shown in FIG. 3, but it is to be understood that this is merely exemplary and that other embodiments and configurations can exist with different numbers of absorbers 332 and desorbers 333.

The LD-based dehumidification system 301 can further include a heat exchanger (HX) 380, which includes a hot side 381 and a cold side 382. As shown in FIG. 3, the hot side 381 is receptive of relatively hot and concentrated LD 311, which is or is not dosed with the surfactant 321, from the sump 334 of each of the two desorbers 333, the absorber 332 is receptive of relatively hot LD 311, which is or is not dosed with the surfactant 321, from the hot side 381. The cold side 382 is receptive of relatively cold and dilute LD 311, which is or is not dosed with the surfactant 321, from the sump 334 of the absorber 332. Each of the two desorbers 333 is receptive of relatively cold LD 311 (via the overhead LD distributor assembly), which is or is not dosed with the surfactant 321, from the cold side 382.

The first pump and valve system 340 can include at least metering pumps 341₁, 341₂ and 341₃ and at least two-way/solenoid or three-way metering valves 342₁, 342₂, 342₃, 342₄, 342₅, 342₆, 342₇ and 342₈ which are all operable and controllable by the controller 370 as described above. The second pump and valve system 360 can include at least a metering pump 361 and at least a metering valve 362 which are operable and controllable by the controller 370 as described above. The sensing system 350 can include one or more sensors 351, which are disposed in signal communication with the controller 370 and which are configured to sense the wetting of the media 331 by the LD 311. The one or more sensors 351 can be deployed as multiple sensors 351 for each of the absorber 332 and for each of the two desorbers 333. Each of the one or more sensors 351 can include or be provided as at least one of a computer-vision enabled optical sensor and a computer-vision enabled depth sensor. Each of the multiple sensors 351 can also include capacitive/resistive moisture sensors embedded in the media 331 to detect dryness which alter their electrical properties based on moisture content or thermal and/or optical sensors based on infrared thermography/optical reflectance respectively to indicate changes in surface properties as the media 331 dries out.

In accordance with embodiments, the surfactant 321 can include at least one or more of the following classes: (I) Nonionic Surfactants (e.g. Polyethylene glycol-based, Alkyl polyglucosides like decyl glucoside, Polysorbates i.e., Tween series, Dodecanoyl-Glucosamine, Fatty Alcohol Ethoxylate), (II) Anionic Surfactants (e.g., Sodium dodecyl sulfate, Sodium lauryl ether sulfate), (III) Zwitterionic Surfactants (e.g., Cocamidopropyl betaine, Lauryl betaine), (IV) Silicone-based Surfactants (Siloxane polyethers like Silwet L-77). The LD 311 can include at least one or more of aqueous solutions of inorganic salts (like Lithium Chloride, Calcium Chloride, Lithium Bromide, Potassium Formate, Ammonium Nitrate, Potassium Nitrate, Sodium Chloride, Magnesium Chloride, Copper Sulfate, Aluminum Chloride, Barium Chloride), organic compounds (like Triethylene Glycol, Ethylene Glycol, Propylene Glycol, Glycerol), acetate and formate-based desiccants (like Potassium Acetate, Potassium Formate, Sodium Acetate, Sodium Formate), mixed and hybrid solutions (like Lithium Chloride-Magnesium Chloride Mixture, Calcium Nitrate and Magnesium Nitrate Blends, composite desiccants). In accordance with further embodiments, the surfactant 321 can include at least one or more of a non-ionic surfactant like Triton and the LD 311 can include at least one or more of aqueous solutions of acetate-based desiccants (like Potassium Acetate).

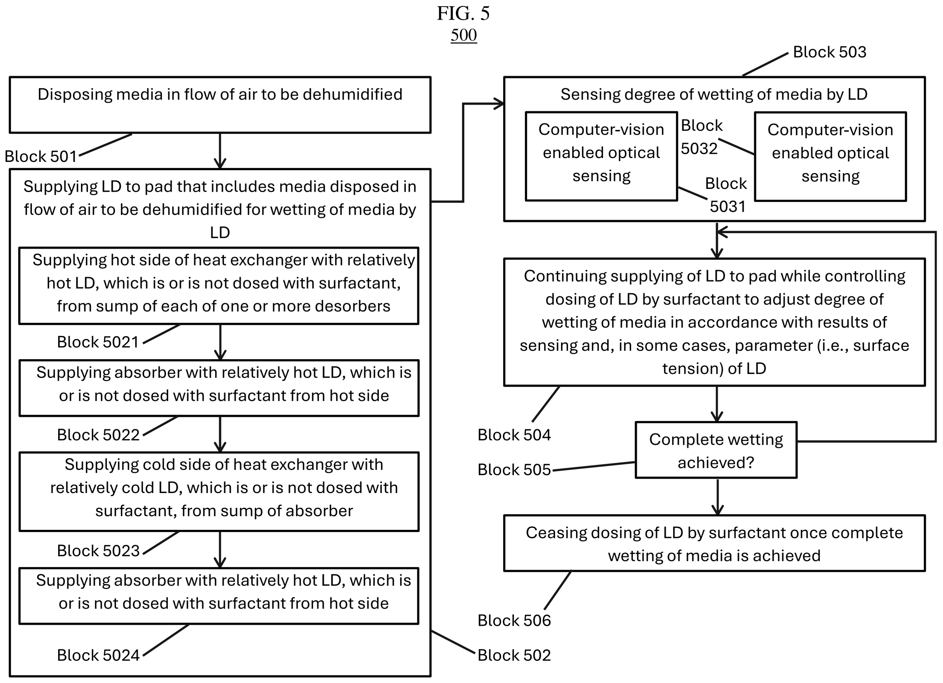

With reference to FIG. 5, a method 500 of operating an LD-based dehumidification system, such as the LD-based dehumidification system 201 of FIG. 2 and the LD-based dehumidification system 301 of FIGS. 3 and 4, is provided. The method 500 includes initially disposing media in a flow of air to be dehumidified (block 501) in certain cases. The method 500 also includes supplying LD to a contact media device including media disposed in the flow of the air to be dehumidified for wetting of the media by the LD (block 502) and sensing a degree of the wetting of the media by the LD (block 503) by at least one of computer-vision enabled optical sensing (block 5031) and computer-vision enabled depth sensing (block 5032). In addition, the method 500 includes continuing the supplying of the LD to the contact media device while controlling a dosing of the LD by surfactant that is compatible with the LD to adjust the degree of the wetting of the media in accordance with results of the sensing of block 503 and, in some cases, a parameter of the LD, such as a surface tension of the LD and a wetting rate (block 504). The method 500 can also include determining whether complete wetting of the media is achieved (block 505) and ceasing the dosing of the LD by the surfactant once complete wetting of the media is achieved (block 506).

In accordance with embodiments, the contact media device can include or be provided as at least one of an absorber and one or more desorbers, the media can include a lattice of filter material, such as high surface area packing porous material, and each of the at least one of the absorber and the one or more desorbers can include a sump disposed below corresponding media. In these or other cases, the supplying of the LD to the contact media device of block 502 can include supplying a hot side of a heat exchanger with relatively hot LD, which is or is not dosed with the surfactant, from the sump of each of the one or more desorbers (block 5021), supplying the absorber with relatively hot LD, which is or is not dosed with the surfactant from the hot side (block 5022), supplying a cold side of the heat exchanger with relatively cold LD, which is or is not dosed with the surfactant, from the sump of the absorber (block 5023) and supplying each of the one or more desorbers with relatively cold LD, which is or is not dosed with the surfactant, from the cold side (block 5024).

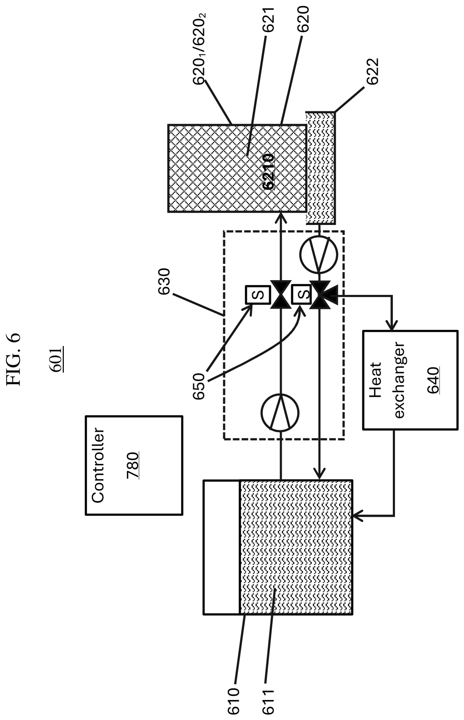

With reference to FIG. 6, an LD-based dehumidification system 601 is provided and includes a tank 610 containing LD 611 and a contact media device 620 that includes media 621 for disposition in a flow of air to be dehumidified and a sump 622 that is uncovered and disposed below the media 621 to receive LD 611 that is gravity drained from the media 621. The contact media device 620 can include or be provided as at least one of an absorber 620₁ and a desorber 620₂ and the media 621, 6210 can include or be provided as asymmetric cross-flow honeycomb pads often made of cellulose-based materials (wood or bamboo-based), polymeric mesh made of hydrophilic materials (e.g., Polypropylene polyester, Polyvinyl chloride), ceramics or porous ceramic pads, open cell foam materials (Polyurethane, Melamine foam) and fibrous materials (Polyester, Nylon).

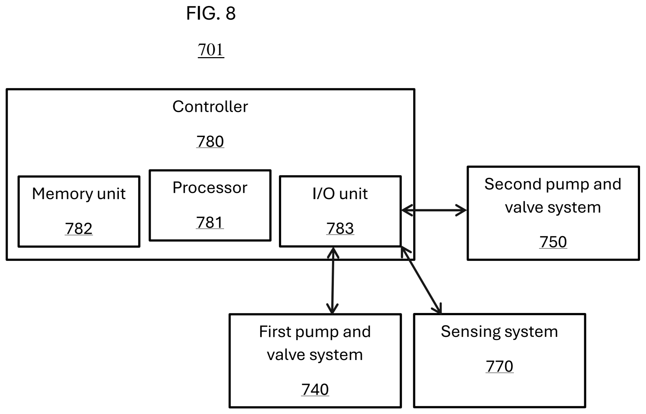

The LD-based dehumidification system 601 further includes a pump and valve system 630 and a heat exchanger 640, such as an HX. The pump and valve system 630 includes one or more pumps and one or more valves and is configured to pump the LD 611 from the tank 610 to the contact media device 620 to wet the media 621 and, for the LD 611 that is gravity drained from the media 621, to pump the LD 611 from the sump 622 to the tank 610. LD 611, which is pumped from the sump 622 to the tank 610, flows through the heat exchanger 640. The LD-based dehumidification system 601 also includes a sensing system 650 and a controller (see, e.g., the controller 780 of FIG. 8). The sensing system 650 is configured to sense one or more conditions of the LD 611. The controller 780 is operably coupled with the pump and valve system 630 and the sensing system 650 and is configured to control the pump and valve system 630 in accordance with a system status and the one or more conditions of the LD 611 that is/are sensed by the sensing system 650.

The one or more conditions of the LD 611 can include, but are not limited to, a concentration of the LD 611, a pH of the LD 611 and a temperature of the LD 611 and the system status can be one of an operational status and a non-operational status. The controller 780 is configured to control the pump and valve system 630 to drain the LD 611 from the sump 622 and to the tank 610 in accordance with a system status being a non-operational status and is further configured to control the pump and valve system 630 to cut off a flow of the LD 611 from the sump 622 and through the heat exchanger 640 in accordance with the one or more conditions of the LD 611 being outside of predefined design conditions as sensed by the sensing system 650.

In accordance with embodiments, the LD 611 can include at least one or more of aqueous solutions of inorganic salts (like Lithium Chloride, Calcium Chloride, Lithium Bromide, Potassium Formate, Ammonium Nitrate, Potassium Nitrate, Sodium Chloride, Magnesium Chloride, Copper Sulfate, Aluminum Chloride, Barium Chloride), organic compounds (like Triethylene Glycol, Ethylene Glycol, Propylene Glycol, Glycerol), acetate and formate-based desiccants (like Potassium Acetate, Potassium Formate, Sodium Acetate, Sodium Formate), mixed and hybrid solutions (like Lithium Chloride-Magnesium Chloride Mixture, Calcium Nitrate and Magnesium Nitrate Blends, composite desiccants). In accordance with further embodiments, the LD 611 can include at least one or more of aqueous solutions of acetate-based desiccants (like Potassium Acetate).

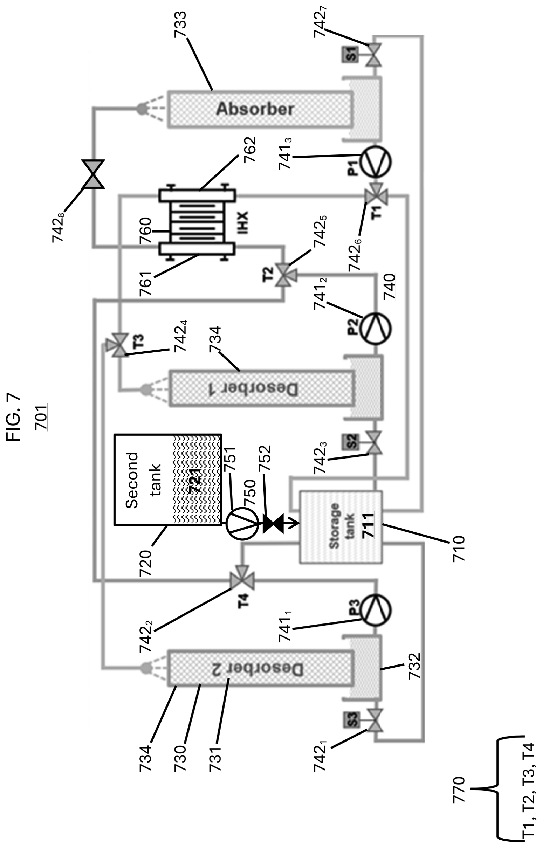

With reference to FIGS. 7 and 8, an LD-based dehumidification system 701 is provided and includes a first tank 710 containing LD 711, an optional second tank 720 containing LD treatment 721, a contact media device 730 including high surface area packing structured contact media, high surface area packing porous material or media 731 (hereinafter referred to as "media 731") for disposition in a flow of air to be dehumidified and a sump 732 that is disposed below the media 731 and uncovered to receive LD 711 that is gravity drained from the media 731. The LD-based dehumidification system 701 further includes a first pump and valve system 740, a second pump and valve system 750, an HX 760, a sensing system 770 and a controller 780 (see FIG. 8).

For purposes of clarity and brevity, the following description will relate to the case in which the LD-based dehumidification system 701 includes the second tank 720 containing the LD treatment 721.

The first pump and valve system 740 is configured to pump the LD 711 from the first tank 710 to the contact media device 730 to wet the media 731 and, for the LD 711 that is gravity drained from the media 731, from the sump 732 to the first tank 710. The second pump and valve system 750 is configured to pump the LD treatment 721 from the second tank 720 to the first tank 710 to treat the LD 711. The HX 760 is fluidly interposed between the sump 732 and the first tank 710 such that LD 711, which is pumped from the sump 732 to the first tank 710, flows through the heat exchanger 760. The sensing system 770 is configured to sense one or more conditions of the LD 711. The controller 780 is operably coupled with the first pump and valve system 740, the second pump and valve system 750 and the sensing system 770 and is configured to control the first and second pump and valve systems 740 and 750 in accordance with a system status and the one or more conditions of the LD 711.

The contact media device 730 can include or be provided as at least one of an absorber 733 and one or more desorbers 734, the media 731 can include or be provided as a lattice of filter material or high surface area packing porous material 7310 and each of the at least one of the absorber 733 and the one or more desorbers 734 includes the sump 732. For purposes of clarity and brevity, the following description will relate to the case in which the LD-based dehumidification system 701 includes one absorber 733 and two desorbers 734 as shown in FIG. 7, but it is to be understood that this is merely exemplary and that other embodiments and configurations can exist with different numbers of absorbers 733 and desorbers 734.

The HX 760 can include a hot side 761 and a cold side 762. As shown in FIG. 7, the hot side 761 is receptive of relatively hot and concentrated LD 711 from the sump 732 of each of the two desorbers 734, the absorber 733 is receptive of relatively hot and concentrated LD 711 from the hot side 761, the cold side 762 is receptive of relatively cold and dilute LD 711 from the sump 732 of the absorber 733 and each of the two desorbers 734 is receptive of relatively cold and dilute LD 711 from the cold side 762.

As shown in FIG. 8, the controller 780 can include a processor 781, a memory unit 782 and an I/O unit 783 by which the processor 781 is communicative with the first and second pump and valve systems 740 and 750 and the sensing system 770. The memory unit 782 has executable instructions stored thereon which are readable and executable by the processor 781. When the processor 781 reads and executes the executable instructions, the processor 781 is caused to operate and to control operations of the first and second pump and valve systems 740 and 750 and the sensing system 770 generally as described herein. That is, when the processor 781 reads and executes the executable instructions, the processor 781 and the controller 780 as a whole can control operations of the first and second pump and valve systems 740 and 750 in accordance with a system status and the one or more conditions of the LD 711.

In accordance with embodiments, the one or more conditions of the LD 711 can include, but are not limited to, a concentration of the LD 711, a pH of the LD 711 and a temperature of the LD 711 and the system status can be one of an operational status and a non-operational status. As such, when the processor 781 reads and executes the executable instructions, the processor 781 and the controller 780 as a whole can control the first pump and valve system 740 to drain the LD 711 from the sump 732 and to the first tank 710 in accordance with a system status being a non-operational status and can control the first pump and valve system 740 to cut off a flow of the LD 711 from the contact media device 730 in accordance with the one or more conditions of the LD 711 being outside of predefined design conditions and tending towards undesirable system operating conditions or unfavorable atmospheric weather conditions to thereby avoid crystallization of the LD 711 on the contact media device 730 and to thereby avoid damage to the heat exchanger 760.

In addition, where the LD treatment 721 includes a pH buffer, such as an alkaline pH buffer, the processor 781 and the controller 780 as a whole can control the second pump and valve system 750 to pump the LD treatment 721 to the first tank 710 to treat the LD 711 in accordance with a pH of the LD 711 being outside of predefined design conditions. Potassium acetate, being a weakly basic salt, its pH can become acidic over time due to the absorption of carbon-dioxide from the air, forming undesirable acetic acid in LD-based HVAC systems using potassium acetate used as the LD 711. Examples of alkaline buffer system which can be used for a liquid desiccant like potassium acetate include sodium carbonate, sodium bicarbonate, sodium hydroxide, potassium carbonate, tris(hydroxymethyl)aminomethane buffer i.e., TRIS, ammonium hydroxide, magnesium hydroxide, and boric acid with Sodium Tetraborate. To keep the pH of potassium acetate solution in the desired basic range, a potassium-based buffer like potassium carbonate would be ideal for maintaining the integrity of the potassium-based chemistry and ensuring long-term pH stability. Thus, it may be possible for the processor 781 and the controller 780 as a whole to prevent the pH of the LD 711 from becoming too acidic or too basic and to thereby avoid or at least delay a need to control the first pump and valve system 740 to cut off the flow of the LD 711 from the contact media device 730 in accordance with the one or more conditions of the LD 711 being outside of predefined design conditions.

The first pump and valve system 740 can include at least metering pumps 741₁, 741₂ and 741₃ and at least two-way/solenoid or three-way metering valves 742₁, 742₂, 742₃, 742₄, 742₅, 742₆, 742₇ and 742₈ which are all operable and controllable by the controller 780 as described above. The second pump and valve system 750 can include at least a metering pump 751 and at least a metering valve 752 which are operable and controllable by the controller 780 as described above. The sensing system 770 can include one or more sensors T1-T4, which are disposed in signal communication with the controller 780 and which are configured to sense the one or more conditions of the LD 711.

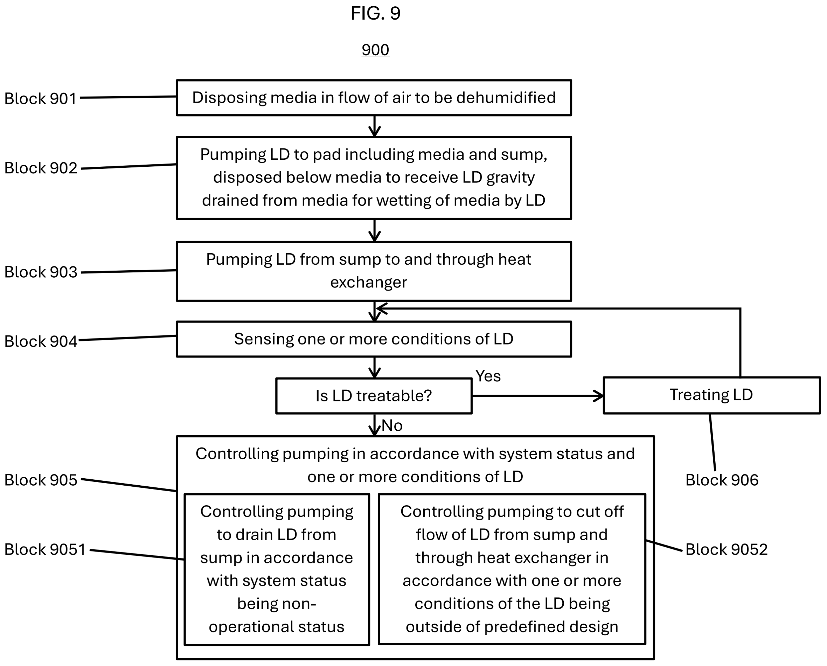

With reference to FIG. 9, a method 900 of operating an LD-based dehumidification system, such as the LD-based dehumidification system 601 of FIG. 6 and the LD-based dehumidification system 701 of FIGS. 7 and 8, is provided. The method 900 includes initially disposing media of a contact media device in a flow of air to be dehumidified (block 901). The method 900 further includes pumping LD to the contact media device including the media and a sump, which is disposed below the media to receive LD gravity drained from the media for wetting of the media by the LD (block 902) and pumping the LD from the sump to and through a heat exchanger (block 903). The method 900 also includes sensing one or more conditions of the LD (block 904) and controlling the pumping in accordance with a system status and the one or more conditions of the LD (block 905). The controlling of block 905 can include controlling the pumping to drain the LD from the sump in accordance with a system status being a non-operational status (block 9051) and controlling the pumping to cut off a flow of the LD from the sump and through the heat exchanger in accordance with the one or more conditions of the LD being outside of predefined design conditions (block 9052).

In accordance with embodiments, the one or more conditions of the LD can be a concentration of the LD, a pH of the LD and a temperature of the LD and the system status can be one of an operational status and a non-operational status. Where the one or more of the conditions of the LD are a pH of the LD, the method 900 can include treating the LD in accordance with a pH of the LD being outside of predefined design conditions (block 906).

Technical effects and benefits of the present invention include the provision of an advanced system for surface wettability modification provided in a liquid desiccant-based dehumidification system of an HVAC system. The system senses unfavorable operating conditions and employs a control system to ensure immediate and uniform wetting of contact media at low desiccant flow rates without the need for preconditioning (i.e., with water). The system aims to safeguard critical components from unforeseen system perturbations while meeting targeted dehumidification performance with promises for reduced risks of LD carryover from dry-spots and LD crystallization in a non-operational system. The system also aims to safeguard critical LDDOAS components from seasonal and/or diurnal weather changes or unforeseen perturbations. The described approaches offer reduced long-term maintenance and lower serviceability costs while meeting targeted dehumidification performance requirements.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration and description, but is not intended to be exhaustive or limited to the technical concepts in the form disclosed. Many modifications and variations will be apparent to those of ordinary skill in the art without departing from the scope of the invention as claimed. The embodiments were chosen and described in order to best explain the principles of the invention and the practical application, and to enable others of ordinary skill in the art to understand the invention for various embodiments with various modifications as are suited to the particular use contemplated.

While the preferred embodiments of the invention have been described, it will be understood that those skilled in the art, both now and in the future, may make various improvements and enhancements which fall within the scope of the claims which follow. These claims should be construed to maintain the proper protection for the invention first described.

The following additional clauses set out features of the invention which may or may not be presently claimed in this application, but which may form basis for future amendment and/or a divisional application:
1. A liquid desiccant (LD)-based dehumidification system, comprising:
   a first tank containing LD;
   a second tank containing LD treatment;
   a contact media device comprising media for disposition in a flow of air to be dehumidified and a sump disposed below the media to receive LD drained from the media;
   a first pump and valve system to pump the LD from the first tank to the contact media device to wet the media and from the sump to the first tank;
   a second pump and valve system to pump the LD treatment to the first tank to treat the LD;
   a heat exchanger through which LD, pumped from the sump to the first tank, flows;
   a sensing system to sense one or more conditions of the LD; and
   a controller to control the first and second pump and valve systems in accordance with a system status and the one or more conditions of the LD.
2. The LD-based dehumidification system according to clause 1, wherein the LD comprises at least one or more of inorganic salts and organic compounds.
3. The LD-based dehumidification system according to either of clause 1 or clause 2, wherein the LD comprises at least one or more of aqueous solutions of inorganic salts, organic compounds, acetate and formate-based desiccants and mixed and hybrid solutions.
4 The LD-based dehumidification system according to any of clauses 1-3, wherein the contact media device is provided as at least one of an absorber and one or more desorbers and the media comprises a high surface area packing porous material.
5. The LD-based dehumidification system according to any of clauses 1-4, wherein the sump is uncovered.
6. The LD-based dehumidification system according to any of clauses 1-5, wherein the one or more conditions of the LD are a concentration of the LD, a pH of the LD and a temperature of the LD and the system status is one of an operational status and a non-operational status.
7. The LD-based dehumidification system according to any of clauses 1-6, wherein:
   the LD treatment comprises a pH buffer, and
   the controller controls the second pump and valve system to pump the LD treatment to the first tank to treat the LD in accordance with a pH of the LD being outside of predefined design conditions.
8. The LD-based dehumidification system according to any of clauses 1-7, wherein:
   the controller controls the first pump and valve system to drain the LD from the sump and to the first tank in accordance with a system status being a non-operational status, and
   the controller controls the first pump and valve system to cut off a flow of the LD from the sump and through the heat exchanger in accordance with the one or more conditions of the LD being outside of predefined design conditions and tending towards undesirable system operating conditions or unfavorable atmospheric weather conditions.

## Claims

1. A liquid desiccant, LD, -based dehumidification system (201, 301, 601, 701) for heating, ventilation, air conditioning and refrigeration, HVAC&R, systems, comprising:
a tank (310, 610, 710) containing LD (230, 311, 611, 711);
a contact media device (210, 330, 620, 730) comprising media (211, 331, 621, 731) for disposition in a flow of air to be dehumidified and a sump (334, 622, 732) disposed below the media to receive LD drained from the media;
a pump and valve system (240, 250, 340, 630, 740) to pump the LD from the tank to the contact media device to wet the media and from the sump to the tank;
a heat exchanger (380, 640, 760) through which LD, which is pumped from the sump to the tank, flows;
a sensing system (260, 350, 650, 770) to sense one or more conditions of the LD; and
a controller (370, 780) to control the pump and valve system in accordance with a system status and the one or more conditions of the LD.

2. The LD-based dehumidification system (201, 301, 601, 701) according to claim 1, wherein the LD (230, 311, 611, 711) comprises at least one or more of inorganic salts and organic compounds.

3. The LD-based dehumidification system (201, 301, 601, 701) according to any preceding claim, wherein the LD (230, 311, 611, 711) comprises at least one or more of aqueous solutions of inorganic salts, organic compounds, acetate and formate-based desiccants and mixed and hybrid solutions.

4. The LD-based dehumidification system (201, 301, 601, 701) according to any preceding claim, wherein the contact media device (210, 330, 620, 730) is provided as at least one of an absorber (210₁, 332, 620₁, 733) and one or more desorbers (210₂, 333, 620₂, 734) and the media (211, 331, 621, 731) comprises a high surface area packing material (211, 3310, 6210, 7310).

5. The LD-based dehumidification system (201, 301, 601, 701) according to any preceding claim, wherein the LD sump (334, 622, 732) is uncovered.

6. The LD-based dehumidification system (201, 301, 601, 701) according to any preceding claim, wherein the one or more conditions of the LD (230, 311, 611, 711) are a concentration of the LD, a pH of the LD and a temperature of the LD and the system status is one of an operational status and a non-operational status.

7. The LD-based dehumidification system (201, 301, 601, 701) according to any preceding claim, wherein:
the controller (370, 780) controls the pump and valve system (240, 250, 340, 630, 740) to drain the LD (230, 311, 611, 711) from the sump (334, 622, 732) and to the tank (310, 610, 710) in accordance with a system status being a non-operational status, and
the controller controls the pump and valve system to cut off a flow of the LD from the sump and through the heat exchanger (380, 640, 760) in accordance with the one or more conditions of the LD being outside of predefined design conditions.

8. The LD-based dehumidification system (301, 701) according to any of claims 1 to 6, wherein:
the tank containing LD (311, 711) is a first tank (310, 710);
the system comprises a second tank (320, 720) containing LD treatment (321, 721);
the pump and valve system (340, 740) is a first pump and valve system (340, 740) to pump the LD from the first tank (310, 710) to the contact media device (330, 730) to wet the media (331, 731) and from the sump (334, 732) to the first tank;
the system comprises a second pump and valve system (360, 750) to pump the LD treatment to the first tank to treat the LD; and
wherein the controller (370, 780) is configured to control both the first and second pump and valve systems in accordance with a system status and the one or more conditions of the LD.

9. The LD-based dehumidification system (301, 701) according to claim 8, wherein:
the LD treatment (321, 721) comprises a pH buffer, and
the controller (370, 780) controls the second pump and valve system (360, 750) to pump the LD treatment to the first tank (310, 710) to treat the LD (311, 711) in accordance with a pH of the LD being outside of predefined design conditions.

10. The LD-based dehumidification system (301, 701) according to claim 8 or 9, wherein:
the controller (370, 780) controls the first pump and valve system (340, 740) to drain the LD (311, 711) from the sump (334, 732) and to the first tank (310, 710) in accordance with a system status being a non-operational status, and
the controller controls the first pump and valve system to cut off a flow of the LD from the sump and through the heat exchanger (380, 760) in accordance with the one or more conditions of the LD being outside of predefined design conditions and tending towards undesirable system operating conditions or unfavorable atmospheric weather conditions.

11. A method (900) of operating a liquid desiccant, LD,-based dehumidification system (201, 301, 601, 701), the method comprising:
pumping (902) LD (230, 311, 611, 711) to a contact media device (210, 330, 620, 730) comprising media (211, 331, 621, 731) and a sump (334, 622, 732) disposed below the media to receive LD drained from the media for wetting of the media by the LD;
pumping (903) the LD from the sump to and through a heat exchanger (380, 640, 760);
sensing (904) one or more conditions of the LD; and
controlling (905) the pumping in accordance with a system status and the one or more conditions of the LD.

12. The method (900) according to claim 11, further comprising disposing (901) the media (211, 331, 621, 731) in a flow of air to be dehumidified.

13. The method (900) according to claim 11 or claim 12, wherein the one or more conditions of the LD (230, 311, 611, 711) are a concentration of the LD, a pH of the LD and a temperature of the LD and the system status is one of an operational status and a non-operational status.

14. The method (900) according to any of claims 11-13, further comprising treating (906) the LD (230, 311, 611, 711) in accordance with a pH of the LD being outside of predefined design conditions and tending towards undesirable system operating conditions or unfavorable atmospheric weather conditions.

15. The method (900) according to any of claims 11-14, wherein the controlling (905) comprises:
controlling (9051) the pumping to drain the LD (230, 311, 611, 711) from the sump (334, 622, 732) in accordance with a system status being a non-operational status, and
controlling (9052) the pumping to cut off a flow of the LD from the sump and through the heat exchanger (380, 640, 760) in accordance with the one or more conditions of the LD being outside of predefined design conditions.
